# EUROPEAN PATENT APPLICATION

(11) **EP 4 793 092 A1**
(43) Date of publication of application: **19.08.2026**
(21) Application number: 24876668.5
(22) Date of filing: 12.10.2024
(51) Int. Cl.: B60N 2/30, B60N 2/06, B60N 2/02, B60N 2/32

(54) **AUTOMOBILE SEAT DEVICE AND CONTROL METHOD**

(30) Priority: 13.10.2023 CN 202311327622; 22.03.2024 CN 202420568248 U
(71) Applicant: Yanfeng International Automotive Technology Co., Ltd., Shanghai 201306 (CN)
(72) Inventor: LI, Kunlin, Shanghai 201306 (CN); REN, Xiong, Shanghai 201306 (CN); ZHANG, Fangbo, Shanghai 201306 (CN); TIAN, Bo, Shanghai 201306 (CN); HU, Jiawei, Shanghai 201306 (CN); LIU, Deyu, Shanghai 201306 (CN)
(74) Representative: Specht, Peter
(86) International application number: PCT/CN2024/124350
(87) International publication number: WO 2025/077863

(57) **Abstract**

The present disclosure discloses An automotive seat device, comprising a backrest assembly, a seat cushion assembly, a support assembly, and a drive assembly for the seat cushion assembly, wherein the backrest assembly is hinged to a rear side of the support assembly via an angle adjustment assembly, characterized in that a front side of the seat cushion assembly is operatively connected to the drive assembly and is capable of moving up and down under a driving action of the drive assembly, thereby enabling height adjustment of the front side of the seat cushion assembly, while a rear side of the seat cushion assembly is capable of moving forward and backward following an up-down movement of the seat cushion assembly. The present disclosure also discloses a control method for controlling the automotive seat device.

## Description

This disclosure is based on and claims priority from Chinese Patent Application No. CN202311327622.0, filed on October 13, 2023, and Chinese Patent Application No. CN202420568248.7, filed on March 22, 2024. The disclosures of these Chinese applications are incorporated herein by reference in their entirety.

### Technical Field

The present disclosure relates to the technical field of seats, and particularly to an automotive seat device and a control method.

### Background of Invention

The improved foldable and reclining seat frame disclosed in Chinese Utility Model Grant Publication No. CN218702863U comprises a backrest frame and a seat cushion frame. The seat cushion frame includes a seat pan, an anti-submarining crossbeam welding assembly, a pair of upper brackets, a drive cross tube welding assembly, and a push-rod motor assembly. The backrest frame is hinged to the rear ends of the pair of upper brackets, wherein the backrest frame can independently adjust relative to the seat cushion frame at any angle between folded, reclined, and flat positions. The left and right ends of the drive cross tube welding assembly are fixedly connected to the rear ends of the pair of upper brackets. The front end of the seat pan is hinged to the upper end of the anti-submarining crossbeam welding assembly, and the lower end of the anti-submarining crossbeam welding assembly is hinged to the front ends of the pair of upper brackets. The motor of the push-rod motor assembly is hinged to the drive cross tube welding assembly, and the end of the push rod of the push-rod motor assembly is hinged to the anti-submarining crossbeam welding assembly. The rear end of the seat pan is connected to the pair of upper brackets in a sliding manner.

Chinese Invention Patent Application Publication No. CN115940698A discloses a multielement synchronized lifting control system and a method for controlling synchronized lifting of multiple elements using this system. The system includes at least: a first motor driving a first moving element, a first detection module detecting the output of the first motor, a second motor driving a second moving element, a second detection module detecting the output of the second motor, and a drive control module controlling the first and second motors. The drive control module is configured to: receive a synchronization command; during the startup phase of the first and second motors, control the first motor and the second motor to perform adaptive adjustment; during the stable phase of the first and second motors, determine in each observation cycle whether the difference between the detection values of the first and second detection modules equals zero; in the case where it is determined that the difference is not equal to zero, compensate the driving force of either the first motor or the second motor; and determine that the first motor and the second motor have reached the target position.

Currently, new energy vehicle manufacturers impose increasingly stringent performance requirements-for example, demanding lighter vehicle body weight by adopting integrated die-cast aluminum alloy bodies; imposing stricter performance criteria (e.g., C-NCAP & CIASI); and expanding usage scenarios to enhance product competitiveness (functional requirements such as high-tone bands, ABTS, etc.).

Moreover, dual-motor-driven seat structures currently available on the market have not yet achieved mass production. The torque/force-speed/RPM differences between the motors are relatively large, the synchronization algorithms are complex, and jamming issues occur easily.

In addition, seat assembly and flexible characteristics of these seat assemblies are becoming increasingly important in today's world. The value of adjustable seat assemblies lies in providing individuals with more working time and greater comfort.

Currently, compared to traditional internal combustion engine vehicles, new energy vehicles have more stringent requirements for seat installation space due to the battery being arranged in the underfloor area of the vehicle; at the same time, occupants are demanding increasingly higher levels of seat comfort.

Chinese Invention Patent Application Publication No. CN108688524A discloses a seat assembly including a seat. The seat back is rotatably connected to the seat so as to reach a fully reclined position. The rear seat lift device includes a mechanism arranged beneath the seat cushion support member near the rear portion of the seat, which is operable between a lowered position and a raised position. When the seat back is in the fully reclined position, the rear portion of the seat is lifted relative to the seat back to minimize the height difference between the rear portion of the seat and the bottom of the seat back.

Chinese Utility Model Patent Grant Publication No. CN208248017U discloses a vehicle seat assembly including a seat with an extendable leg support. The seat back is operatively connected to the seat. The seat assembly includes a passenger detection system. A rear seat lift device is arranged within the seat and is operable between a lowered position and a raised position. When the seat back is in the fully reclined position, the rear portion of the seat is lifted relative to the seat back to minimize the height difference between the rear of the seat and the bottom of the seat back. A control module communicates with the passenger detection system, the seat, and the seat back. The control module is configured to activate the actuation assembly of the seat back to rotate the seat back rearward, extend the leg support forward, and raise the rear seat lift device to provide optimal resting conditions for passengers.

Chinese Invention Patent Application Publication No. CN111186344A discloses a vehicle seat comprising: a seat cushion having a cushion frame; a seat back having a backrest frame; a lifting device; a reclining mechanism arranged at the upper portion of the rear end of the lifting device and connected to the lower end of the backrest frame; a first link member rotatably arranged between the rear end of the cushion frame and the reclining mechanism; a second link member rotatably arranged between the upper portion of the front end of the lifting device and the front end of the cushion frame; and rails arranged beneath the lifting device. In conjunction with the operation of the reclining mechanism causing the seat cushion to recline backward, the rear end of the seat cushion moves forward and upward via the first link member, and the front end of the seat cushion moves forward and upward via the second link member.

As described above, Chinese Utility Model Patent Grant Publication No. CN218702863U also discloses an improved foldable and reclining seat frame.

Although the seats disclosed in the aforementioned patents can achieve folding and reclining functions, they cannot maintain the seat cushion at a relatively low profile throughout the entire adjustment process, nor can they meet the requirement of new energy vehicles for minimal space occupation by seat cushion layout.

### Summary of Invention

The objective of the present disclosure is to provide an automotive seat device with improved structure or functionality, and a method for controlling this automotive seat device.

According to a first aspect of the disclosure, an automotive seat device is provided. The automotive seat device comprises a backrest assembly, a seat cushion assembly, a support assembly, and a drive assembly for the seat cushion assembly, wherein the backrest assembly is hinged to a rear side of the support assembly via an angle adjustment assembly, characterized in that a front side of the seat cushion assembly is operatively connected to the drive assembly and is capable of moving up and down under a driving action of the drive assembly, thereby enabling height adjustment of the front side of the seat cushion assembly, while a rear side of the seat cushion assembly is capable of moving forward and backward following an up-down movement of the seat cushion assembly.

In order to meet the requirement of new energy vehicles for minimizing the space occupied by seat cushion arrangement, the present disclosure can be implemented in a preferred embodiment through the following technical solution:
The automotive seat device comprises or is constructed as a foldable low-profile automotive seat frame, wherein the backrest assembly comprises or is constructed as a backrest frame, wherein the seat cushion assembly comprises or is constructed as a seat cushion frame, wherein the drive assembly for the seat cushion assembly is constructed as a push-rod motor assembly, wherein the front side of the seat cushion frame is hinged to a front side of the support assembly via a front hinge rod, wherein the push-rod motor assembly is hinged to the front hinge rod and is capable of pushing the front hinge rod to move, thereby driving the front side of the seat cushion frame to adjust its height, wherein the automotive seat frame further comprises at least one fixed bracket, on which a horizontally extending sliding slot is correspondingly provided, wherein a rear side of the seat cushion frame is slidably disposed within the sliding slot and is capable of sliding along the sliding slot.

In particular, the disclosure proposes a foldable low-profile automotive seat frame, comprising a backrest frame, a seat cushion frame, a support assembly, an angle adjustment motor assembly, and a push-rod motor assembly, wherein the lower end of the backrest frame is hinged to the rear side of the support assembly via the angle adjustment motor assembly and is driven via the angle adjustment motor assembly to pivot, wherein the front side of the seat cushion frame is hinged to the front side of the support assembly via a front hinge rod, wherein the push-rod motor assembly is hinged to an appropriate position on the front hinge rod and is capable of pushing the front hinge rod to move, thereby driving the front side of the seat cushion frame to adjust its height, characterized in that the automotive seat frame further includes at least one fixed bracket, on which a horizontally extending sliding slot is correspondingly provided, wherein the rear side of the seat cushion frame is slidably disposed within the sliding slot and is capable of sliding along the sliding slot.

In a preferred embodiment of the disclosure, the support assembly comprises a pair of front support assemblies and a pair of rear support assemblies, the pair of front support assemblies and the pair of rear support assemblies being respectively fixed onto a vehicle floor or onto upper rails of a pair of sliding rail assemblies, wherein the fixed brackets are provided as a pair and are respectively fixed onto the pair of rear support assemblies; preferably, wherein the front hinge rod are also provided as a pair, wherein lower ends of the pair of front hinge rods are hinged onto the pair of front support assemblies and upper ends of the pair of front hinge rods are hinged onto the front side of the seat cushion frame; in particular, wherein the lower end of the backrest frame is hinged to the pair of rear support assemblies via the angle adjustment motor assembly.

In another preferred embodiment of the disclosure, the pair of front hinge rods are fixed together via a front cross tube welding assembly; preferably, a push-rod motor of the push-rod motor assembly is hinged onto the front cross tube welding assembly, and an end of the push rod of the push-rod motor assembly is hinged onto the rear support assembly. Installing the push-rod motor in a front-mounted configuration can save space beneath the seat cushion frame.

In a preferred embodiment of the disclosure, the pair of fixed brackets are connected together via a rear reinforcement tube.

In a preferred embodiment of the disclosure, the seat cushion frame comprises a pair of seat cushion side plates, a seat pan, and a rear tube welding assembly, wherein the seat pan is fixed to the front sides of the pair of seat cushion side plates, wherein both ends of the rear tube welding assembly are fixedly connected to the rear sides of the pair of seat cushion side plates; preferably, the upper ends of the pair of front hinge rods are respectively hinged to the front sides of the pair of seat cushion side plates, wherein the rear sides of the pair of seat cushion side plates are respectively slidably disposed within the sliding slots via stepped bolt assemblies, wherein the stepped bolts are capable of sliding along the sliding slots.

In a preferred embodiment of the disclosure, the rear tube welding assembly comprises a rear cross tube and a pair of rear hinge rods, wherein one end of the rear hinge rod is connected to the rear cross tube, and the other end of the rear hinge rod is slidably disposed within the sliding slot via the stepped bolt assembly and is capable of sliding along the sliding slot.

In a preferred embodiment of the disclosure, the stepped bolt assembly comprises a stepped bolt, a bushing, a washer, and a nut, wherein the bushing is sleeved onto a stepped shaft of the stepped bolt and is slidably disposed within the sliding slot, wherein the washer is sleeved onto the stepped shaft of the stepped bolt and cooperates with a bolt head of the stepped bolt to axially limit the bushing, wherein the nut is threaded onto the stepped bolt and cooperates with the fixed bracket to axially limit the washer.

In a preferred embodiment of the disclosure, the shape of the bushing is configured such that its length extending along the direction of the sliding slot is greater than its length extending in the direction perpendicular to the sliding slot.

In a preferred embodiment of the disclosure, backrest travel-limiting brackets are fixed onto a pair of backrest side plates of the backrest frame, wherein limiting steps are provided on a pair of backrest lower connecting plates of the backrest frame, wherein when the backrest frame pivots forward from a design position to achieve a forward pivoted-to-flat position of the backrest frame, the backrest travel-limiting brackets contact the limiting steps to limit the forward pivoted-to-flat motion of the backrest frame.

In a preferred embodiment of the disclosure, the pair of backrest lower connecting plates are respectively fixed onto the pair of rear support assemblies.

In a preferred embodiment of the disclosure, the angle adjustment assembly is constructed as a recliner, wherein a distance between an H-point of the backrest frame and a center of the recliner is greater than 50 mm.

In a preferred embodiment of the disclosure, the front cross tube welding assembly comprises a front cross tube and a motor bracket welded onto the front cross tube, wherein the push-rod motor of the push-rod motor assembly is hinged onto the motor bracket.

In a preferred embodiment of the disclosure, the motor bracket has a U-shaped structure wherein the motor bracket is provided with a bent hook.

In a preferred embodiment of the disclosure, the angle adjustment motor of the angle adjustment motor assembly and the push-rod motor of the push-rod motor assembly are both equipped with Hall sensors.

In a preferred embodiment of the disclosure, the angle adjustment motor of the angle adjustment motor assembly and the push-rod motor of the push-rod motor assembly are controlled by a switch.

By adopting the above technical solutions, in the present disclosure, the rear side of the seat cushion frame is slidably disposed within the sliding slots of the fixed brackets, wherein two fixed brackets are fixed onto the support assembly. During a collision, the rear side of the seat cushion frame only slides along the sliding slot without detaching from the support assembly, thereby be able to prevent detachment of the seat cushion frame during impact.

The backrest frame of this foldable low-profile automotive seat frame can pivot rearward by 60-70° from its design position via the angle adjustment motor assembly, forming a bed-like configuration together with the seat cushion frame. Additionally, the motors are equipped with Hall sensors and, via a control switch, enable one-touch operation to achieve the forward and downward movement of the seat cushion frame. The backrest frame is pivoted forward by 97° from its design position to achieve a forward pivoted-to-flat position of the backrest frame, and the rotation point of the backrest frame does not affect comfort (H-point Z is lowered by 45 mm). Moreover, under the premise of ensuring a forward travel of 185 mm for the seat cushion frame, the block value can reach 210 mm.

Another technical problem to be solved by the present disclosure lies in providing, in view of the aforementioned technical problems existing in conventional seats, a foldable and reclining automotive seat assembly that indirectly enhances the core component's own stiffness by more than half, thereby improving the stability of the seat cushion assembly and enabling favorable performance during high-speed collisions.

To this end, in a preferred embodiment, it is configured such that, the automotive seat device is constructed as a foldable and reclining automotive seat, wherein the support assembly comprises or is constructed as a seat frame base, wherein the angle adjustment assembly is constructed as a recliner, wherein the backrest assembly is hinged to a rear side of the seat frame base via the recliner, wherein the seat frame base is fixed onto upper rails of a pair of sliding rails or onto a vehicle floor, wherein the automotive seat further comprises a pair of front brackets, wherein lower ends of the front brackets are hinged to a front side of the seat frame base, wherein the rear side of the seat cushion assembly is hinged to the rear side of the seat frame base, wherein the front side of the seat cushion assembly is hinged to upper ends of the front brackets, wherein the front side of the seat cushion assembly is driven to move up and down by dual electric actuation mechanisms mounted on the seat frame base, wherein the rear side of the seat cushion assembly moves forward and backward following the up-down movement of the front side of the seat cushion assembly, wherein the dual electric actuation mechanisms are controlled by a control device.

In particular, a foldable and reclining automotive seat is provided, comprising a backrest assembly, a seat cushion assembly, and a seat frame base, wherein the backrest assembly is hinged to the rear side of the seat frame base via a recliner, wherein the seat frame base is fixed onto the upper rails of a pair of sliding rails or directly onto the vehicle floor, wherein the automotive seat further includes a pair of front brackets, wherein the lower ends of the front brackets are hinged to the front side of the seat frame base, wherein the rear side of the seat cushion assembly is hinged to the rear side of the seat frame base, wherein the front side of the seat cushion assembly is hinged to the upper ends of the front brackets; wherein the front side of the seat cushion assembly is driven to move up and down by dual electric actuation mechanisms mounted on the seat frame base, wherein the rear side of the seat cushion assembly moves forward and backward following the up-down movement of the front side of the seat cushion assembly; wherein the dual electric actuation mechanisms are controlled by a control device.

In a preferred embodiment of the disclosure, the seat further includes a pair of lower connecting plates, wherein the seat frame base comprises a pair of lower connecting plate support brackets fixed onto upper rails of the pair of sliding rails or onto the vehicle floor, wherein the backrest assembly is hinged onto the lower connecting plate support brackets via the lower connecting plates, wherein the seat cushion assembly comprises a movable seat frame, wherein a rear side of the movable seat frame is hinged onto rear ends of the pair of lower connecting plate support brackets, wherein a front side of the movable seat frame is hinged to upper ends of the front brackets, wherein lower ends of the front brackets are hinged onto front ends of the lower connecting plate support brackets and are driven to move up and down by the dual electric actuation mechanisms, wherein the rear side of the movable seat frame moves forward and backward following the up-down movement of the front side of the movable seat frame.

In a preferred embodiment of the disclosure, the movable seat frame comprises a pair of side plates, a first front cross tube, and a first rear cross tube, wherein both ends of the first front cross tube are respectively hinged to front sides of the pair of side plates, wherein both ends of the first rear cross tube are respectively hinged to rear sides of the pair of side plates.

In a preferred embodiment of the disclosure, both ends of the first front cross tube are respectively hinged to the front sides of the pair of side plates via a plastic bushing.

In a preferred embodiment of the disclosure, the seat frame base further comprises a pair of sliding slot cross plates fixed onto the pair of lower connecting plate support brackets or onto upper rails of the sliding rails, wherein a sliding slot is provided on each sliding slot cross plate, wherein the rear side of the movable seat frame is hinged into the sliding slots via a pair of rear brackets and sliding slot stepped bolts, wherein the sliding slot stepped bolts are installed at lower ends of the pair of rear brackets and are capable of sliding within the sliding slots.

In a preferred embodiment of the disclosure, sliding slot bushings are sleeved onto the sliding slot stepped bolts, wherein the sliding slot bushings are capable of sliding within the sliding slots.

In a preferred embodiment of the disclosure, upper ends of the pair of rear brackets are hinged onto the first rear cross tube.

In a preferred embodiment of the disclosure, the seat frame base further comprises a second rear cross tube, wherein both ends of the second rear cross tube are respectively fixedly connected to rear sides of the pair of lower connecting plate support brackets, wherein motors of the dual electric actuation mechanisms are hinged onto the second rear cross tube via motor brackets.

In a preferred embodiment of the disclosure, both ends of the first front cross tube are respectively hinged to upper ends of the pair of front brackets, wherein lower ends of the pair of front brackets are respectively hinged to front sides of the pair of lower connecting plate support brackets via stepped bolts, wherein a front bracket reinforcement bracket is fixed onto each front bracket, wherein ends of push rods of the dual electric actuation mechanisms are respectively hinged to the pair of front bracket reinforcement brackets via front end connecting screws.

In a preferred embodiment of the disclosure, the seat frame base further comprises a second front cross tube, wherein both ends of the second front cross tube are respectively fixedly connected to front sides of the lower connecting plate support brackets.

Yet another technical problem to be solved by the present disclosure lies in providing a control method for controlling the automotive seat assembly of the present disclosure.

A second aspect of the present disclosure provides a control method for controlling the automotive seat device, characterized in that, when the automotive seat begins adjusting from an initial position, motors of the dual electric actuation mechanisms drive lead screws to rotate, wherein the rotating lead screws drive push rods of the dual electric actuation mechanisms to extend, causing the sliding slot bushings to slide within the sliding slots, thereby resulting in a change in a relative angle between the front brackets and the pair of side plates, thereby flattening the front side of the seat cushion assembly and achieving angle adjustment of the seat cushion assembly.

In a preferred embodiment of the disclosure, after the dual electric actuation mechanisms are activated, the control device detects a stroke difference Δy of the dual electric actuation mechanisms, wherein if Δy > a threshold b, then the control device controls an electric actuation mechanism with a larger stroke to stop moving until Δy = 0, then restarts the electric actuation mechanism with the larger stroke, and adjusts a duty cycle of the motor driving force of the electric actuation mechanism with the larger stroke to C, completing a seat function adjustment, wherein If Δy ≤ the threshold b, the control device does not need to intervene, and the motors of the dual electric actuation mechanisms do not stop moving until the seat function adjustment of the automotive is completed.

In a preferred embodiment of the disclosure, the threshold b is a ratio of the stroke difference to the total stroke, and the ratio of the threshold b ranges between 5% and 20%.

In a preferred embodiment of the disclosure, the duty cycle of the motor driving force ranges between 80% and 100%.

Due to the adoption of the aforementioned technical solution, the present disclosure further employs dual electric actuation mechanisms to drive the adjustment of the seat cushion assembly, thereby indirectly enhancing the structural stiffness of the core components by more than 50% and improving the stability of the seat cushion assembly, resulting in favorable performance during high-speed collisions.

### Brief Description of Drawings

Figure 1 shows a kinematic diagram of the foldable, low-profile automotive seat frame of the present disclosure in a folded state.
Figure 2 shows a kinematic diagram of the foldable, low-profile automotive seat frame of the present disclosure in a normal sitting posture state.
Figure 3 shows a kinematic diagram of the foldable, low-profile automotive seat frame of the present disclosure in a reclined state.
Figure 4 shows a kinematic diagram of the foldable, low-profile automotive seat frame of the present disclosure in a lying-flat-to-bed state.
Figure 5 shows a schematic view of a seat with the foldable, low-profile automotive seat frame of the present disclosure in a normal seating posture.
Figure 6 shows a schematic view of a seat with the foldable, low-profile automotive seat frame of the present disclosure in a one-touch bed conversion status.
Figure 7 shows a schematic view of a seat with the foldable, low-profile automotive seat frame of the present disclosure in a folded posture.
Figure 8 shows a schematic view of the foldable, low-profile automotive seat frame of the present disclosure in a folded posture.
Figure 9 shows a perspective view of the foldable, low-profile automotive seat frame of the present disclosure mounted on sliding rail assemblies (View I).
Figure 10 shows a perspective view of the foldable, low-profile automotive seat frame of the present disclosure mounted on sliding rail assemblies (View II).
Figure 11 shows a top view of the foldable, low-profile automotive seat frame of the present disclosure mounted on sliding rail assemblies.
Figure 12 shows a perspective view of the foldable, low-profile automotive seat frame of the present disclosure mounted on sliding rail assemblies (View III), with the seat pan omitted.
Figure 13 shows an exploded view of the foldable, low-profile automotive seat frame of the present disclosure.
Figure 14 shows an exploded view of the backrest frame of the foldable, low-profile automotive seat frame of the present disclosure.
Figure 15 shows an exploded view of the support assembly, sliding rail assembly, and fixed bracket of the foldable, low-profile automotive seat frame of the present disclosure.
Figure 16 shows an exploded view of assembly of the seat cushion side plate and rear tube welded subassembly of the foldable, low-profile automotive seat frame of the present disclosure.
Figure 17 shows an assembly diagram of welded assembly of the front hinge rod and front cross tube of the foldable, low-profile automotive seat frame of the present disclosure.
Figure 18 shows a structural diagram of the front cross tube welded assembly of the foldable, low-profile automotive seat frame of the present disclosure.
Figure 19 shows a structural diagram of the rear tube welded assembly of the foldable, low-profile automotive seat frame of the present disclosure.
Figure 20 shows a structural diagram of the seat pan of the foldable, low-profile automotive seat frame of the present disclosure.
Figure 21 shows an installation diagram of the push-rod motor assembly of the foldable, low-profile automotive seat frame of the present disclosure.
Figure 22 shows an assembly diagram of the stepped bolt assembly and fixed bracket of the foldable, low-profile automotive seat frame of the present disclosure.
Figure 23 shows an exploded view of the stepped bolt assembly of the foldable, low-profile automotive seat frame of the present disclosure.
Figure 24 shows a sliding diagram illustrating the movement of the bushing within the sliding slot on the fixed bracket in the foldable, low-profile automotive seat frame of the present disclosure.
Figure 25 shows a schematic view of the foldable, low-profile automotive seat frame of the present disclosure in a folded state.
Figure 26 shows a schematic view of the foldable, low-profile automotive seat frame of the present disclosure in a normal sitting posture state.
Figure 27 shows a schematic view of the foldable, low-profile automotive seat frame of the present disclosure in a reclined state.
Figure 28 shows a schematic view of the foldable, low-profile automotive seat frame of the present disclosure in a lying-flat-to-bed state.
Figure 29 shows an exploded view of the seat cushion assembly of the foldable and reclining automotive seat of the present disclosure.
Figure 30 shows an assembly diagram of the seat cushion assembly of the foldable and reclining automotive seat of the present disclosure (View I).
Figure 31 shows an assembly diagram of the seat cushion assembly of the foldable and reclining automotive seat of the present disclosure (View II).
Figure 32 shows an assembly diagram of the seat cushion assembly of the foldable and reclining automotive seat of the present disclosure (View III).
Figure 33 shows an assembly diagram of the seat cushion assembly of the foldable and reclining automotive seat of the present disclosure (View IV).
Figure 34 shows an assembly flow diagram of the seat cushion assembly of the foldable and reclining automotive seat of the present disclosure.
Figure 35 shows a schematic view of the foldable and reclining automotive seat of the present disclosure in its design position.
Figure 36 shows a simplified view of the foldable and reclining automotive seat of the present disclosure in its design position.
Figure 37 shows a schematic view of the seat cushion assembly of the foldable and reclining automotive seat of the present disclosure in its design position.
Figure 38 shows a schematic view of the foldable and reclining automotive seat of the present disclosure with the backrest assembly pivoted to flat.
Figure 39 shows a simplified view of the foldable and reclining automotive seat of the present disclosure with the backrest assembly pivoted to flat.
Figure 40 shows a schematic view of the seat cushion assembly of the foldable and reclining automotive seat of the present disclosure with the backrest assembly pivoted to flat.
Figure 41 shows a control flow diagram of the seat cushion assembly of the foldable and reclining automotive seat of the present disclosure.
Figure 42 shows a schematic diagram illustrating the adjustment of the two motors in the foldable and reclining automotive seat of the present disclosure (View I).
Figure 43 shows a schematic diagram illustrating the adjustment of the two motors in the foldable and reclining automotive seat of the present disclosure (View II).

### Detailed Description of Drawings

The present disclosure will be further described below in conjunction with the accompanying drawings and specific embodiments.

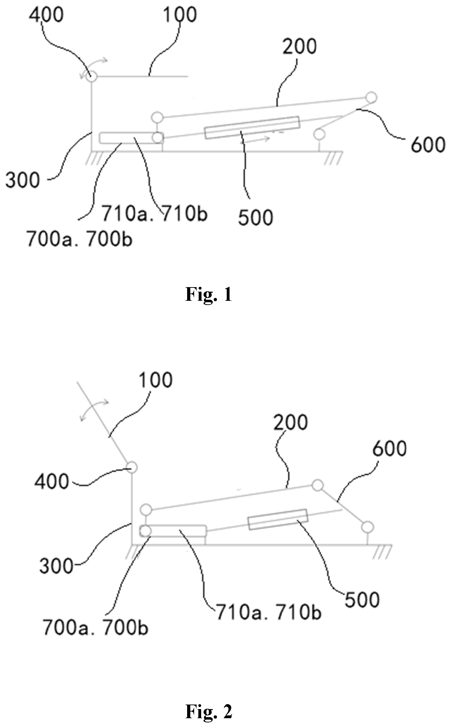

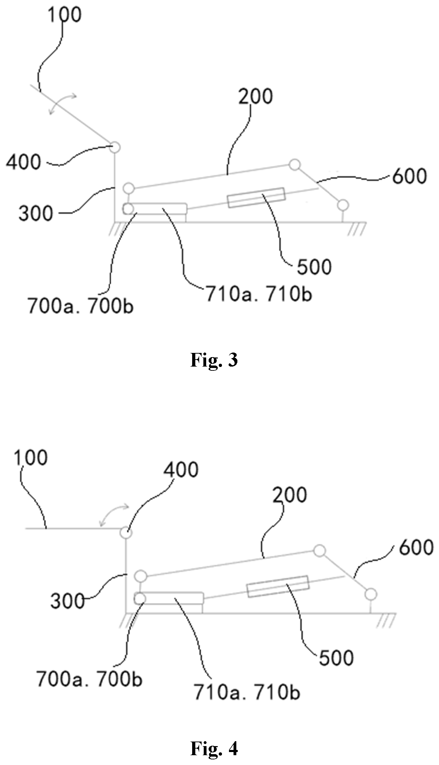

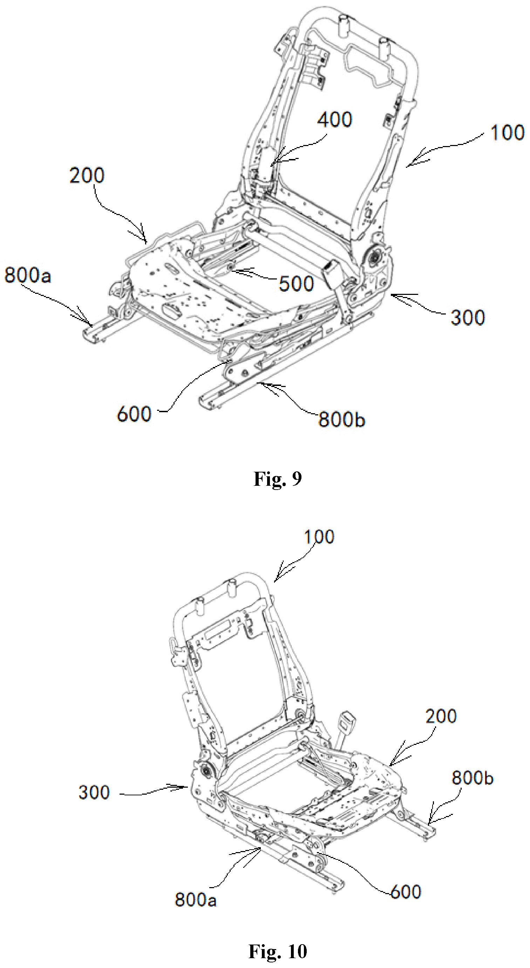

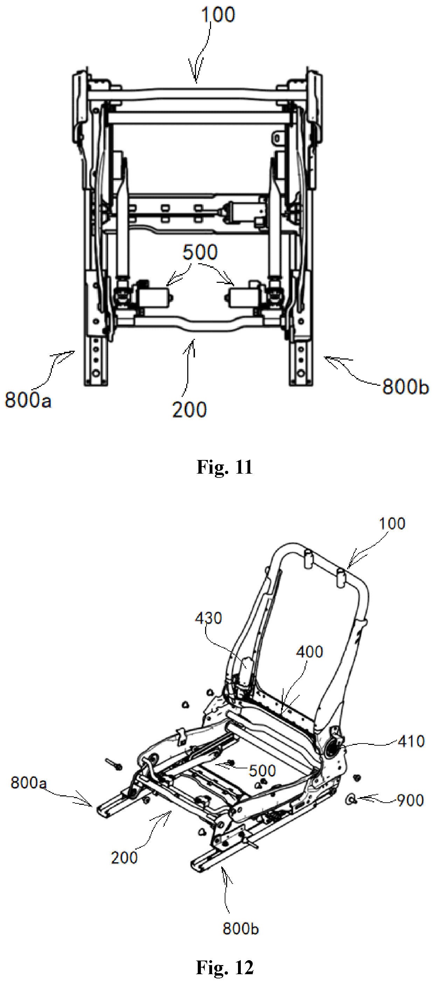

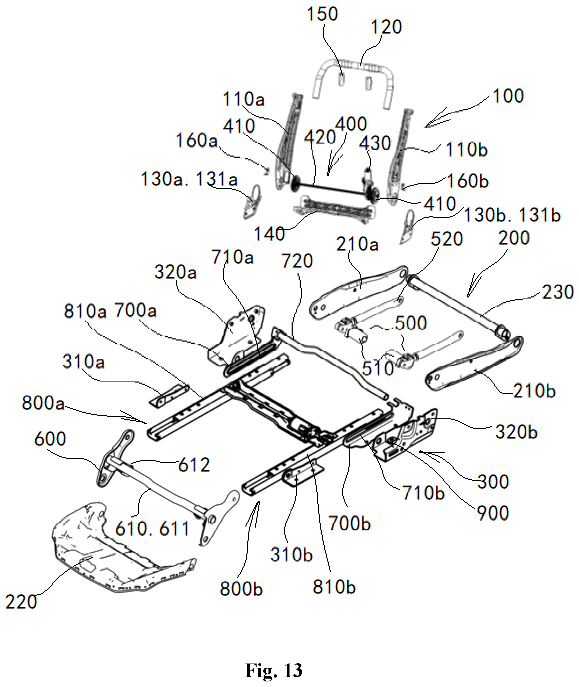

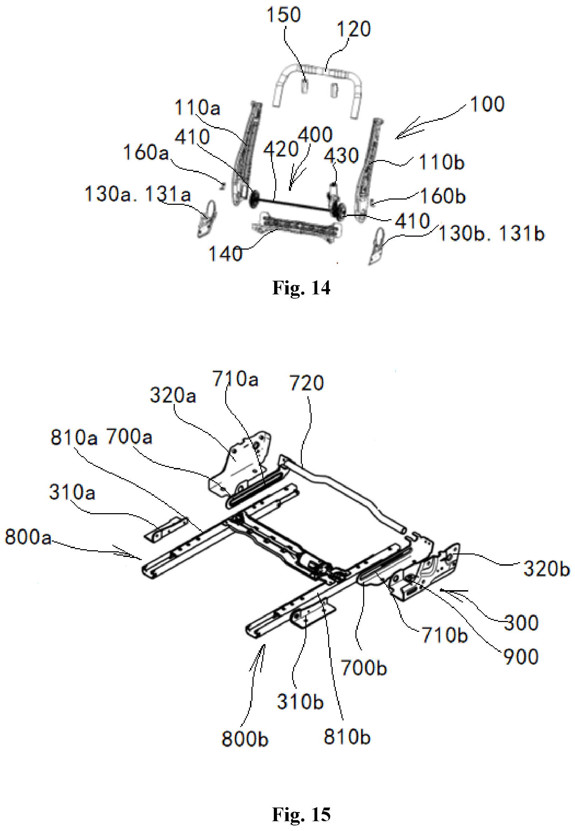

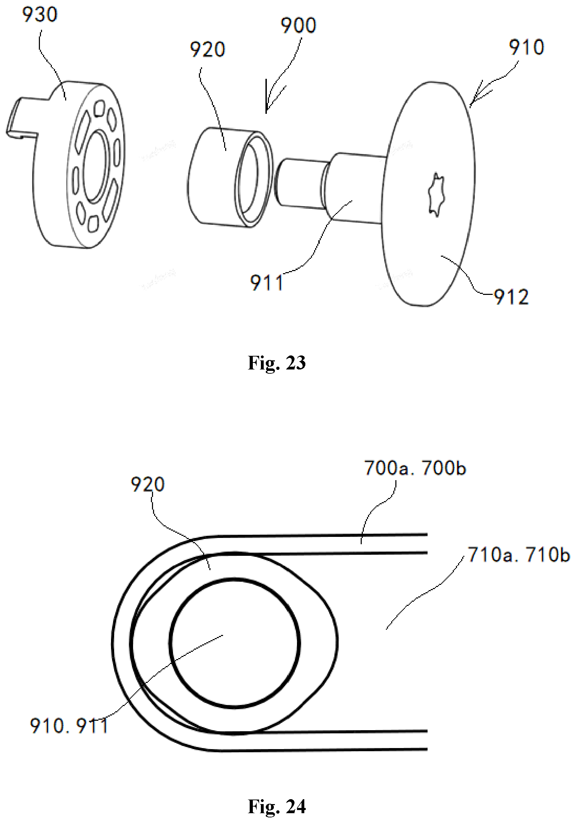

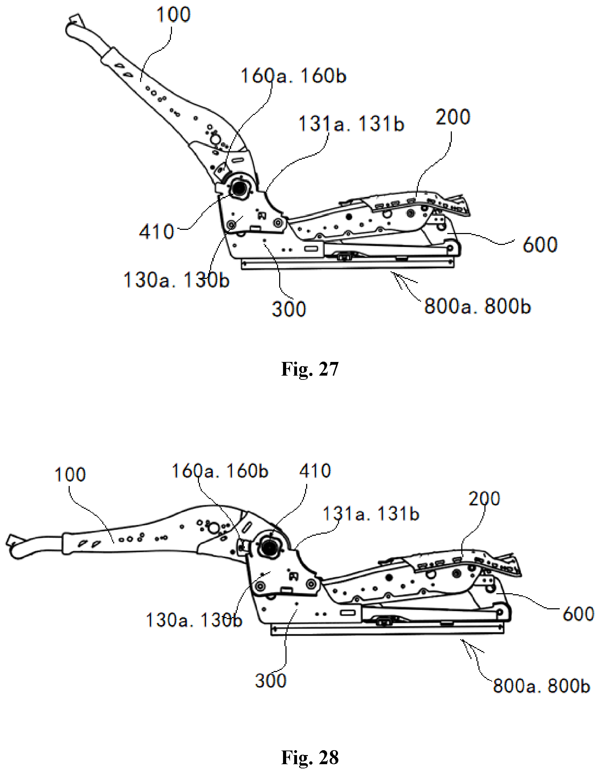

Below, referring to Figures 1 to 28, a first embodiment of the automotive seat device according to the present disclosure is described. The automotive seat device of the first embodiment is constructed as a foldable low-profile automotive seat frame.

Referring to Figures 1-6 and Figures 25-28, the illustrated foldable low-profile automotive seat frame includes a backrest frame 100, a seat cushion frame 200, a support assembly 300, an angle adjustment motor assembly 400, and a push-rod motor assembly 500.

The lower end of the backrest frame 100 is hinged to the rear side of the support assembly 300 via the angle adjustment motor assembly 400 and is driven by the angle adjustment motor assembly 400 to pivot among a normal seating position, a reclined position, and a fully flat position.

The front side of the seat cushion frame 200 is hinged to the front side of the support assembly 300 via a front hinge rod 600. The push-rod motor assembly 500 is hinged to an appropriate position-e.g., the middle portion-of the front hinge rod 600, and pushes the front hinge rod 600 to move, thereby driving the front side of the seat cushion frame 200 to adjust its height.

In other words, the backrest frame 100 and the seat cushion frame 200 are driven independently: the backrest frame 100 is pivoted by being driven by the angle adjustment motor assembly 400, while the seat cushion frame 200 is driven by the push-rod motor assembly 500 to move up and down.

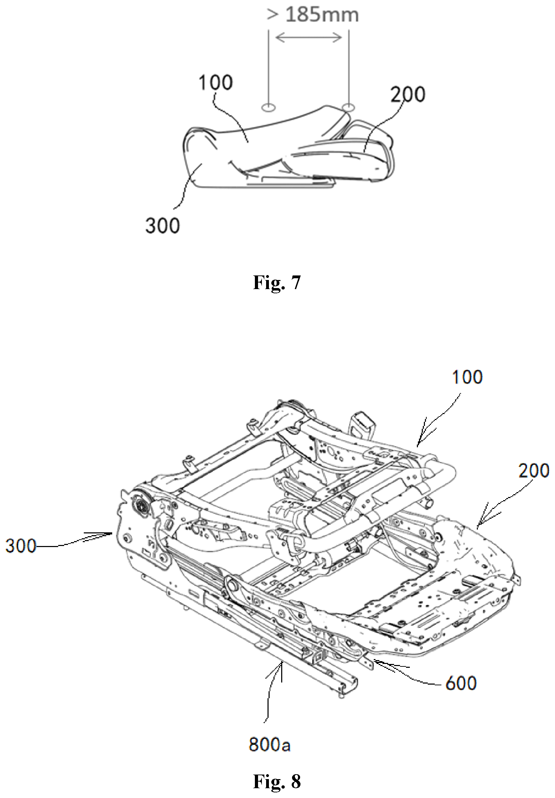

Referring to Figures 7-24, one of the main features of the present disclosure is that it further includes a pair of fixed brackets 700a and 700b. A horizontally extending sliding slot 710a, 710b is provided on each fixed bracket 700a, 700b. The rear side of the seat cushion frame 200 is slidably disposed within the sliding slots 710a, 710b and is capable of sliding along them. The two fixed brackets 700a, 700b are fixed onto the support assembly 300. In the event of a collision, the rear side of the seat cushion frame 200 only slides along the sliding slots 710a, 710b without detaching from the support assembly, thereby being able to prevent detachment of the seat cushion frame during impact.

The support assembly 300 of the present disclosure includes a pair of front support assemblies 310a, 310b and a pair of rear support assemblies 320a, 320b. The pair of front support assemblies 310a, 310b and the pair of rear support assemblies 320a, 320b are respectively fixed onto the vehicle floor or onto the upper rails 810a, 810b of a pair of sliding rail assemblies 800a, 800b. The pair of fixed brackets 700a, 700b are respectively fixed onto the pair of rear support assemblies 320a, 320b. Additionally, the pair of fixed brackets 700a, 700b are connected together by a rear reinforcement tube 720 to enhance strength.

The seat cushion frame 200 includes a pair of seat cushion side plates 210a, 210b, a seat pan 220, and a rear tube welding assembly 230. The seat pan 220 is fixed to the front sides of the pair of seat cushion side plates 210a, 210b by welding. Both ends of the rear tube welding assembly 230 are fixedly connected to the pair of seat cushion side plates 210a, 210b by riveting.

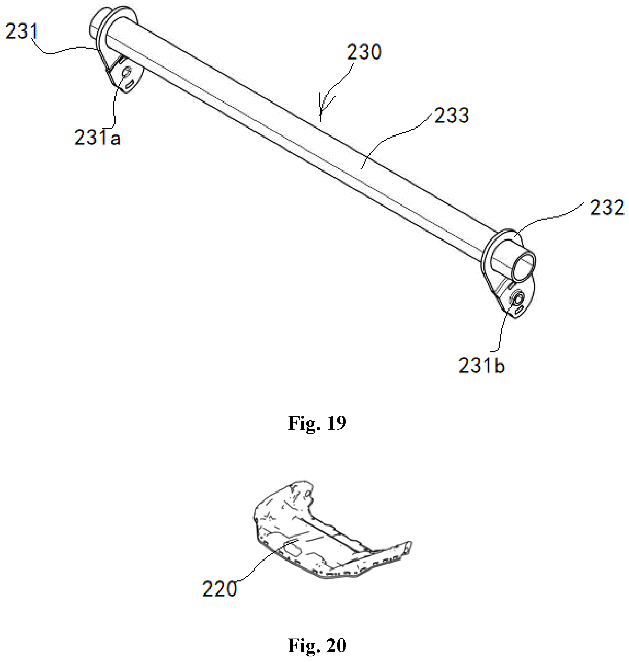

Referring particularly to Figure 19, the rear tube welding assembly 230 includes a rear cross tube 233 and a pair of rear hinge rods 231, 232. One end of each rear hinge rod 231, 232 is connected to the rear cross tube 233, and stepped bolt assemblies 231a, 232a are fixed to their opposite ends. The stepped bolt assemblies 231a, 232a are fixed to the pair of seat cushion side plates 210a, 210b by riveting.

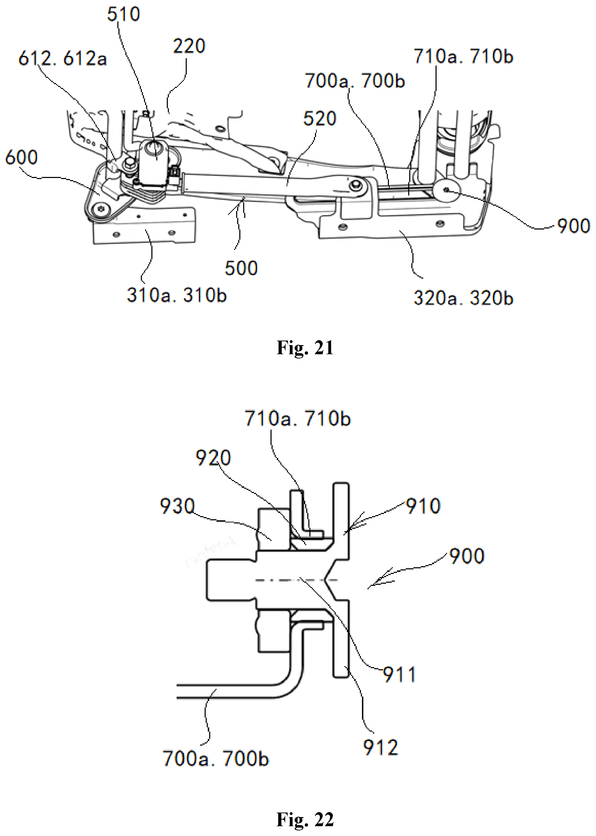

To enable the rear side of the seat cushion frame 200 to be slidably disposed within the sliding slots 710a, 710b and slide along them, another set of stepped bolt assemblies 900 is anchored to the rear sides of the pair of seat cushion side plates 210a, 210b. Referring particularly to Figures 22-24, this another stepped bolt assembly 900 includes a stepped bolt 910, a bushing 920, a washer 930, and a nut (not shown in the figures).

The shape of the bushing 920 may be configured such that its length extending along the direction of the sliding slots 710a, 710b is greater than its length extending in the direction perpendicular to the sliding slots 710a, 710b-for example, an elliptical shape-to prevent the bushing 920 from rotating during forward and backward sliding of the seat cushion. The bushing 920 is sleeved onto the stepped shaft 911 of the stepped bolt 910 and is slidably disposed within the sliding slots 710a, 710b. The washer 930 is also sleeved onto the stepped shaft 911 and cooperates with the bolt head 912 of the stepped bolt 910 to axially limit the bushing 920. The nut is threaded onto the stepped bolt 910 and, together with the fixed brackets 700a, 700b, axially limits the washer 930. The end face of the washer 930 slides in frictional contact with the fixed brackets 700a, 700b.

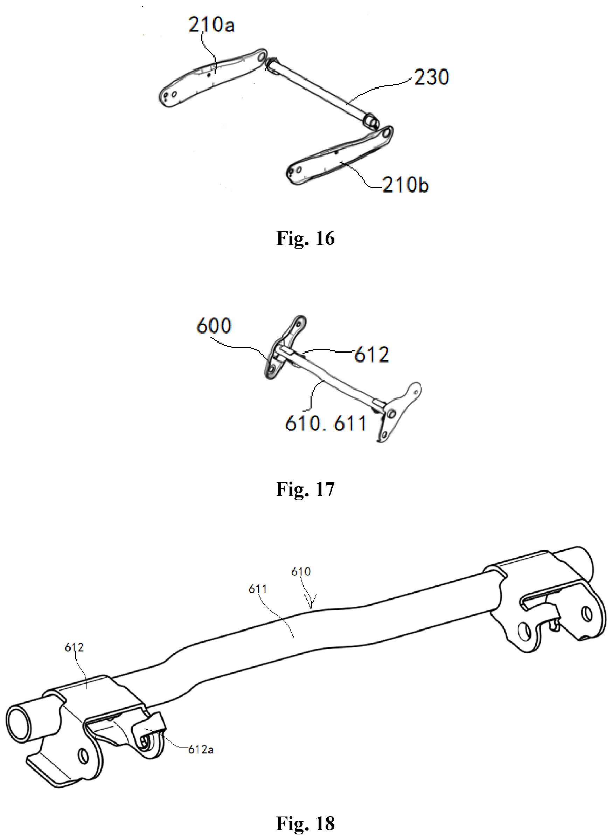

Referring to Figures 17 and 18, the front hinge rods 600 are also provided as a pair. The pair of front hinge rods 600 are anchored together via a front cross tube welding assembly 610. The front cross tube welding assembly 610 includes a front cross tube 611 and a pair of motor brackets 612 welded onto the front cross tube 611. The motor brackets 612 have a U-shaped structure and are provided with a bent hook 612a. A push-rod motor 510 of the push-rod motor assembly 500 is hinged to the motor brackets 612, thereby positioning the push-rod motor 510 of the push-rod motor assembly 500 forward and freeing up space beneath the seat cushion frame 200 for installation of other components

The lower ends of the pair of front hinge rods 600 are hinged to the pair of front support assemblies 310a, 310b, and their upper ends are hinged to the pair of seat cushion side plates 210a, 210b. Thus, when the push-rod motor assembly 500 drives the pair of front hinge rods 600 to move, the pair of front hinge rods 600 drive the pair of seat cushion side plates 210a, 210b to move up and down, thereby driving the entire seat cushion frame 200 to move up and down.

The push-rod motor assembly 500 moves in order to drive a pair of front hinged rods 600. The end of the push rod 520 of the push-rod motor assembly 500 is fixed onto the rear support assemblies 320a, 320b. Thus, when the push-rod motor 510 of the push-rod motor assembly 500 operates, it can drive the pair of front hinge rods 600 to move.

Furthermore, as required by actual design needs, multiple push-rod motors 510 may be arranged, all using the same fixing method to connect to the front hinge rods 600 or motor brackets 612, with their ends connected to the rear support assemblies 320a, 320b.

The backrest frame 100 includes a pair of backrest side plates 110a, 110b, an upper backrest curved tube 120, a pair of backrest lower connecting plates 130a, 130b, a lower backrest cross plate 140, and a pair of headrest mounting metal tubes 150. The two ends of the upper backrest curved tube 120 are welded and fixedly connected to the upper ends of the pair of backrest side plates 110a, 110b. The pair of headrest mounting metal tubes 150 are spaced apart and welded onto the upper backrest curved tube 120 for headrest installation.

The pair of backrest lower connecting plates 130a, 130b are respectively hinged to the lower ends of the pair of backrest side plates 110a, 110b via recliners 410. The lower ends of the pair of backrest side plates 110a, 110b are connected together by the lower backrest cross plate 140. The two recliners 410 are linked by a synchronization rod 420, which is driven to rotate by a recliner motor 430. The rotating synchronization rod 420 drives both recliners 410 to operate.

The pair of backrest lower connecting plates 130a, 130b are respectively fixed onto the pair of rear support assemblies 320a, 320b by fasteners.

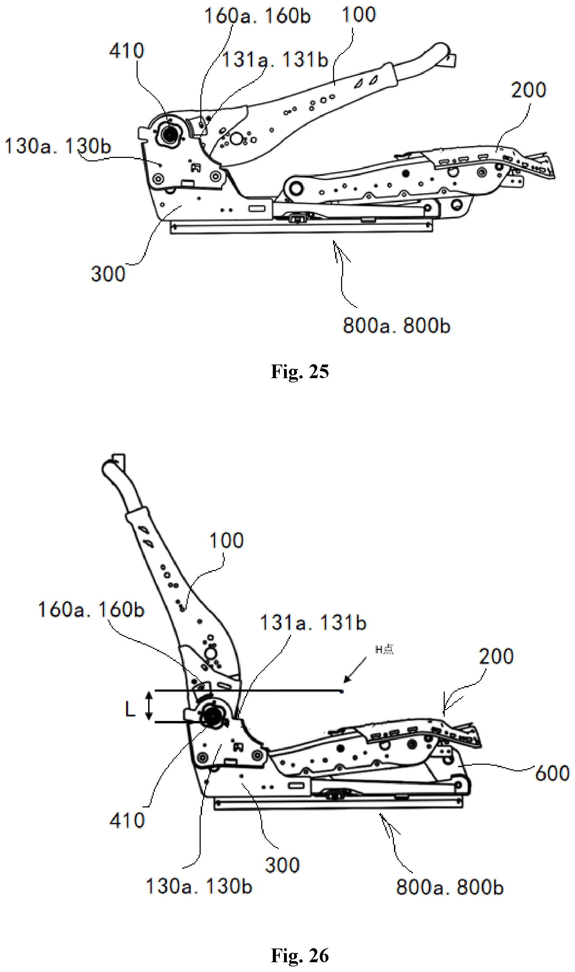

Referring particularly to Figure 26, the distance L between the H-point of the backrest frame 100 and the center of the recliner 410 is greater than 50 mm, so that the H-point of the backrest frame 100 properly supports the occupant's lumbar region, enhancing comfort.

In order to limit the backrest frame 100 when it is pivoted to flat, a backrest travel-limiting bracket 160a, 160b is fixed onto each of the pair of backrest side plates 110a, 110b, and a limiting step 131a, 131b is provided on each of the pair of backrest lower connecting plates 130a, 130b. When the backrest frame 100 pivots forward by 97° from its design position to achieve a forward pivoted-to-flat position of the backrest frame 100, the backrest travel-limiting brackets 160a, 160b contact the limiting steps 131a, 131b to limit the forward pivoted-to-flat motion of the backrest frame 100.

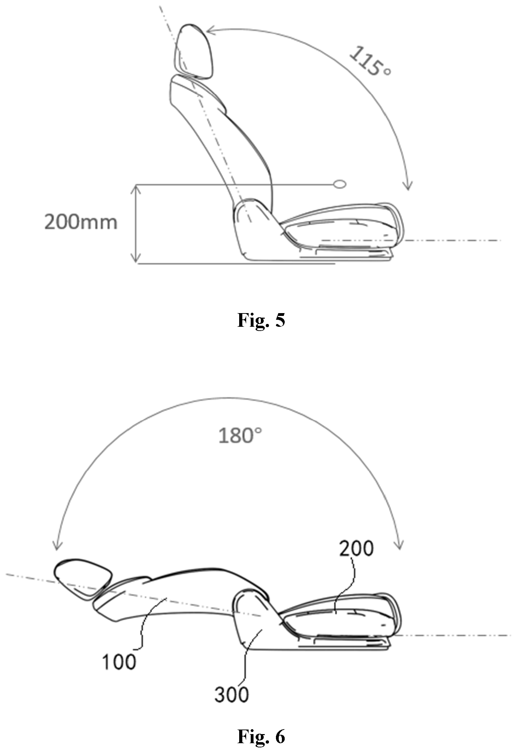

Both the angle adjustment motor 430 of the angle adjustment motor assembly 400 and the push-rod motor 510 of the push-rod motor assembly 500 are equipped with Hall sensors and are controlled by a switch (not shown), enabling one-touch forward flattening (see Figure 7) and one-touch bed conversion (see Figure 6).

Referring particularly to Figures 5-7, the backrest, i.e., the backrest frame 100, is electrically folded forward by 90° to 97.5° until the backrest reaches a 0° flat position. After the backrest is pivoted to flat, it can widen the rear passengers' field of view, and the backrest back panel in the pivoted-to-flat state can provide an area for rear passengers to rest their feet or place items. At this time, the seat cushion, i.e., the seat cushion frame 200, can move forward by a distance of more than 185 mm driven by the push-rod motor assembly 500. Under the premise that the forward travel distance of the seat cushion frame 200 is sufficiently large, the Block value can be minimized to 200 mm. Reducing the forward travel distance of the seat cushion frame 200, the Block value can be further reduced accordingly.

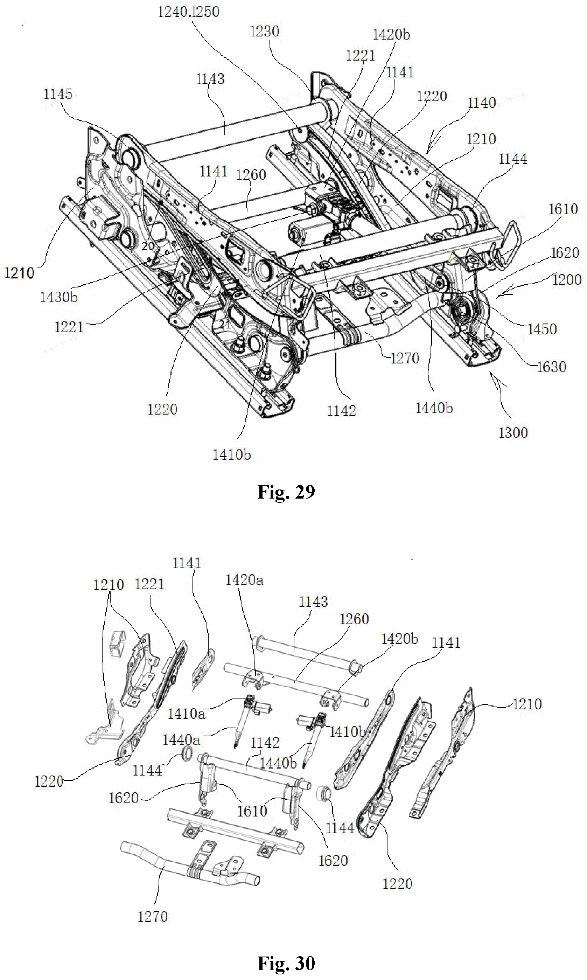

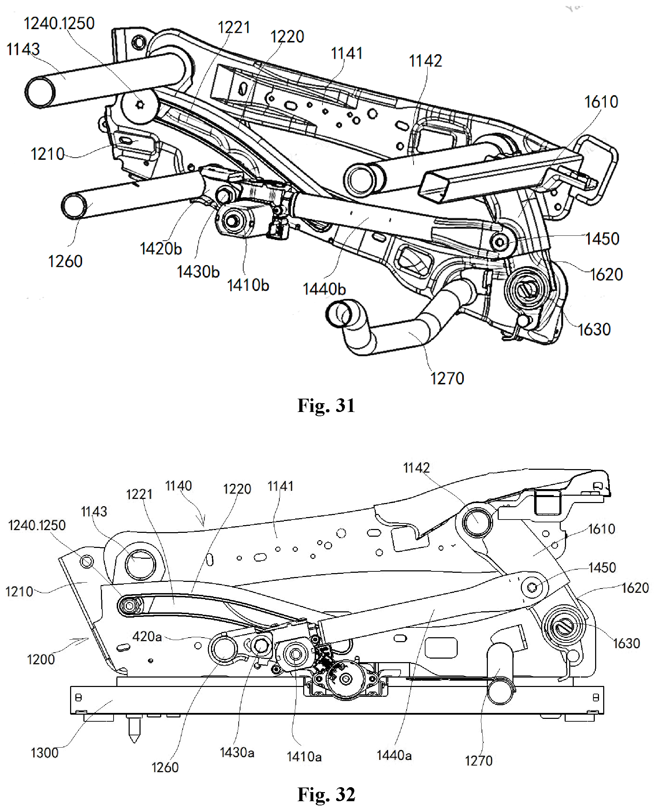

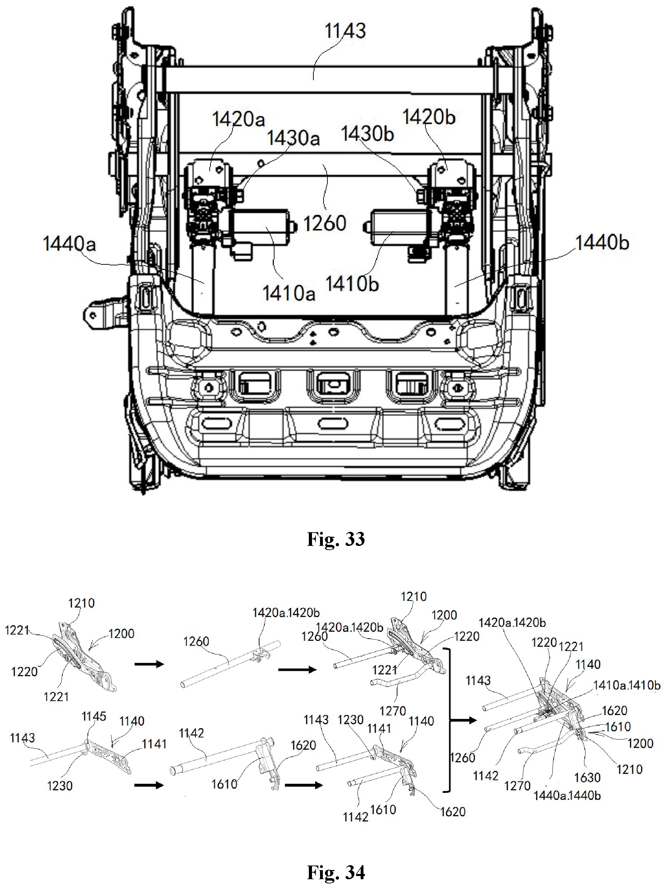

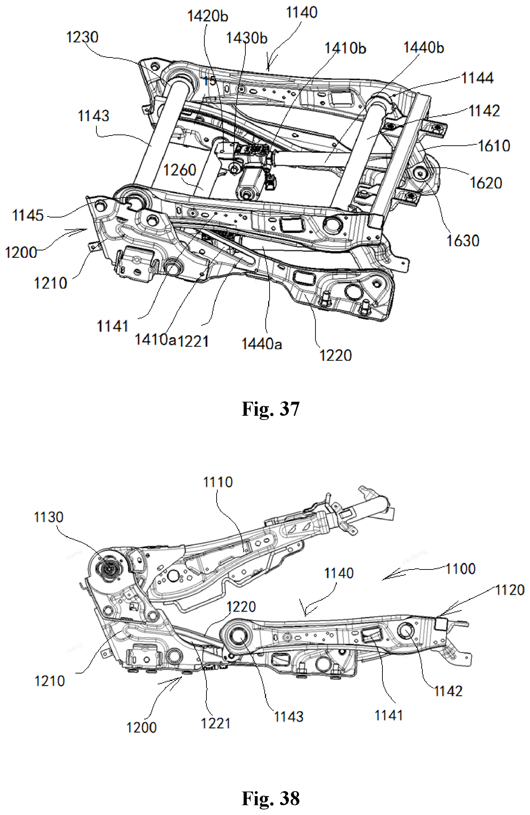

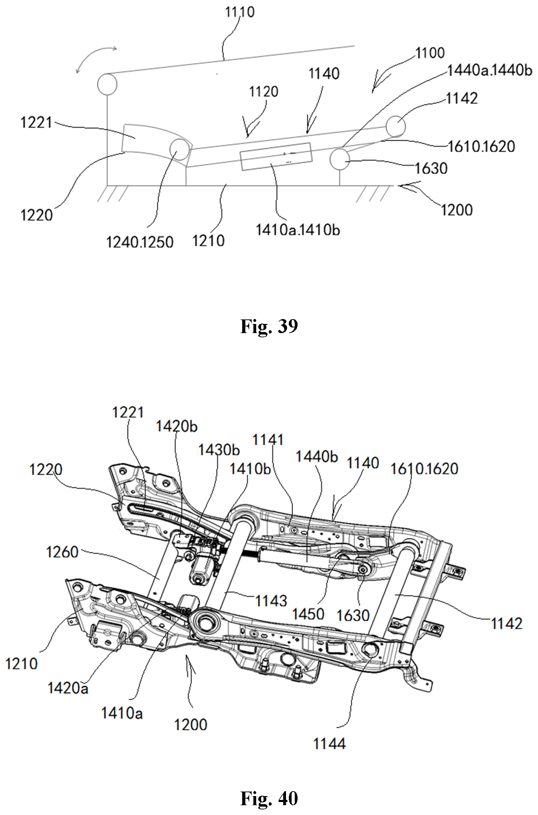

Next, referring to Figures 29-43, a second embodiment of the automotive seat device and its control method according to the present disclosure is described. The automotive seat device of the second embodiment is constructed as a foldable and reclining automotive seat.

Referring to Figures 29-35, the Figures illustrate foldable and reclining automotive seat. The automotive seat 1100 includes a backrest assembly 1110, a seat cushion assembly 1120, and a seat frame base 1200. The backrest assembly 1110 is hinged to the rear side of the seat frame base 1200 via a recliner 1130. The seat frame base 1200 is fixed onto the upper rails of a pair of sliding rails 1300 or onto the vehicle floor.

The seat cushion assembly 1120 includes a movable seat frame 1140. The seat cushion of the seat cushion assembly 1120 is fixed onto the movable seat frame 1140. The movable seat frame 1140 includes a pair of side plates 1141, a front cross tube 1142 (the aforementioned first front cross tube), and a rear cross tube 1143 (the aforementioned first rear cross tube). Both ends of the front cross tube 1142 are respectively hinged to the front sides of the pair of side plates 1141 via a plastic bushing 1144, allowing the front cross tube 1142 to rotate relative to the pair of side plates 1141. Both ends of the rear cross tube 1143 are respectively hinged to the rear sides of the pair of side plates 1141 via a plastic bushing 1145.

The seat frame base 1200 includes a pair of lower connecting plate support brackets 1210 fixed onto the upper rails of the pair of sliding rails 1300 or onto the vehicle floor, and sliding slot cross plates 1220 welded onto the pair of lower connecting plate support brackets 1210. A sliding slot 1221 is provided on each sliding slot cross plate 1220.

The seat frame base 1200 further includes a rear cross tube 1260 (the aforementioned second rear cross tube) and a front cross tube 1270 (the aforementioned second front cross tube). Both ends of the rear cross tube 1260 are respectively fixedly connected to the rear sides of the pair of lower connecting plate support brackets 1210, and both ends of the front cross tube 1270 are respectively fixedly connected to the front sides of the lower connecting plate support brackets 1210.

The automotive seat 1100 further includes a pair of lower connecting plates 1210a. The backrest assembly 1110 is hinged to the lower connecting plates 1210a via the recliner 1130, and the lower connecting plates 1210a are hinged to the lower connecting plate support brackets 1210.

A pair of rear brackets 1230 are sleeved onto both ends of the rear cross tube 1143, allowing the rear brackets 1230 to rotate relative to the rear cross tube 1143. Sliding slot stepped bolts 1240 are installed at the lower ends of the pair of rear brackets 1230. Sliding slot bushings 1250 are sleeved onto the sliding slot stepped bolts 1240, and the sliding slot bushings 1250 are capable of sliding within the sliding slots 1221, thereby hinging the rear side of the movable seat frame 1140 to the rear side of the seat frame base 1200.

Motors 1410a, 1410b of the dual electric actuation mechanisms are respectively hinged to motor brackets 1420a, 1420b via rear end connecting bolts 1430a, 1430b, allowing the motors 1410a, 1410b to rotate relative to the motor brackets 1420a, 1420b. The motor brackets 1420a, 1420b are respectively welded to both ends of the rear cross tube 1260. The motors 1410a, 1410b of the dual electric actuation mechanisms respectively drive push rods 1440a, 1440b to extend or retract via lead screws. The ends of the push rods 1440a, 1440b are respectively hinged to a pair of front bracket reinforcement brackets 1610 via front end connecting screws 1450. The pair of front bracket reinforcement brackets 1610 are welded onto front brackets 1620. The upper ends of the pair of front brackets 1620 are hinged to both ends of the front cross tube 1142, and the lower ends of the front brackets 1620 are hinged to the front sides of the pair of lower connecting plate support brackets 1210 via stepped bolts 1630. Thus, the movable seat frame 1140 and the seat frame base 1200 form a four-bar linkage mechanism via the sliding slot stepped bolts 1240 and the stepped bolts 1630.

The movable seat frame 1140 of the present disclosure is raised or lowered at the front side of the seat frame base 1200 by extension or retraction of push rods 1440a, 1440b of the dual electric actuation mechanisms. The rear side of the movable seat frame 1140 pivots and moves forward/backward following the up-down movement of the front side of the movable seat frame 1140.

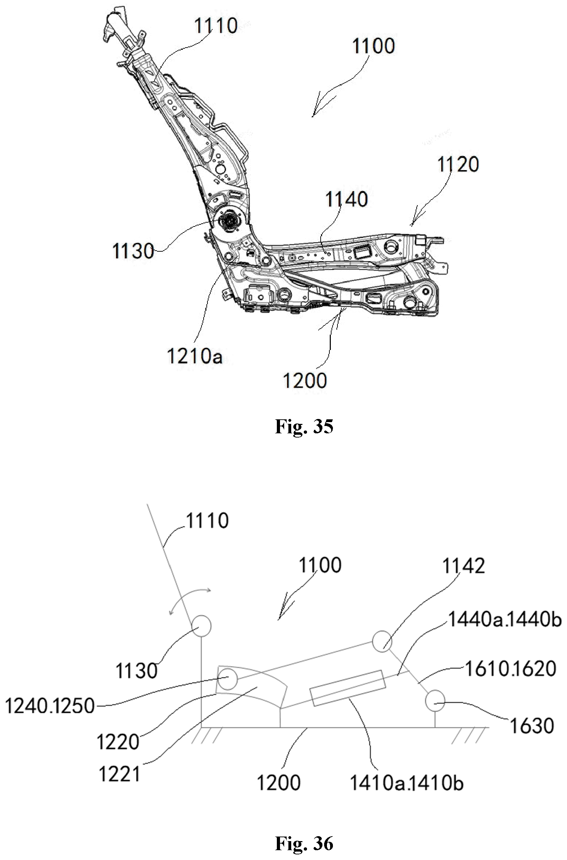

In the control method for controlling a foldable and reclining automotive seat of the present disclosure, it is specified that when the automotive seat begins adjusting from its initial position (see Figures 35-40), the motors 1410a, 1410b of the dual electric actuation mechanisms drive lead screws to rotate. The rotating lead screws drive the push rods 1440a, 1440b of the dual electric actuation mechanisms to extend, causing the sliding slot bushings 1250 to slide within the sliding slots 1221, thereby resulting in a change in the relative angle between the front brackets 1620 and the pair of side plates 1141, thereby flattening the front side of the seat cushion assembly and achieving angle adjustment of the seat cushion assembly.

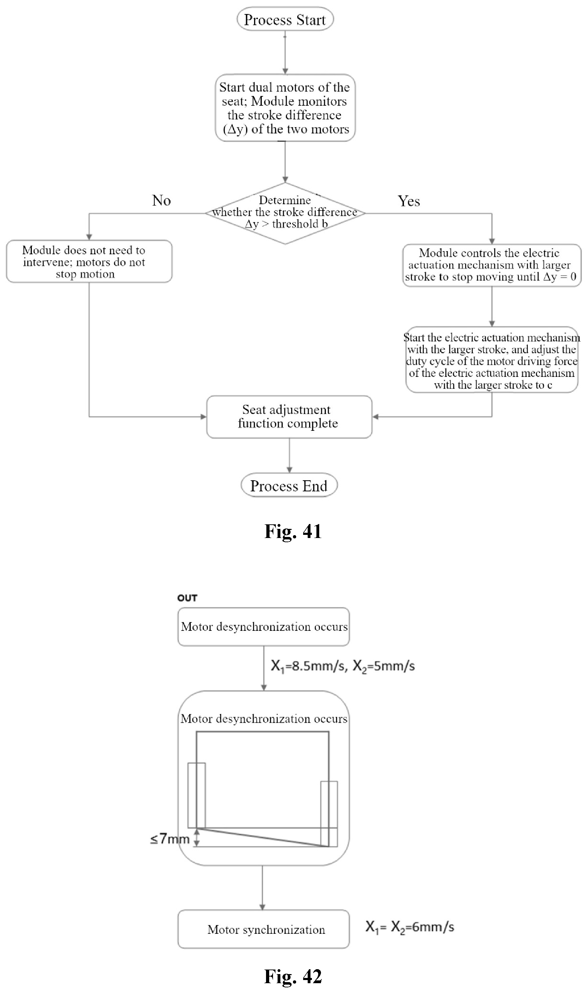

Referring to Figure 41, after the dual electric actuation mechanisms are activated, the control device detects the stroke difference Δy of the dual electric actuation mechanisms. If Δy > a threshold b, then the control device controls an electric actuation mechanism with a larger stroke to stop moving until Δy = 0, then restarts the electric actuation mechanism with the larger stroke, and adjusts a duty cycle of the motor driving force of the electric actuation mechanism with the larger stroke to C, completing a seat function adjustment. If Δy ≤ the threshold b, the control device does not need to intervene, and the motors of the dual electric actuation mechanisms do not stop moving until the seat function adjustment is completed.

The threshold b is the ratio of the stroke difference to the total stroke, and the value of threshold b ranges between 5% and 20%. The duty cycle of the motor driving force ranges between 80% and 100%.

Referring to Figure 42, during rearward movement of the seat cushion assembly, if the motors 1410a, 1410b of the seat cushion assembly become unsynchronized, the first motor 1410a has a first stroke speed X1 = 8.5 mm/s, and the second motor 1410b has a second stroke speed X2 = 5 mm/s. The first driving force F1 of the first electric actuation mechanism in the dual electric actuation mechanisms increases (↑), while the second driving force F2 of second electric actuation mechanism in the dual electric actuation mechanisms decreases (↓). More than 0.5 times of the first driving force F1 is transferred to the second driving force F2. When F1 = 2100 N and F2 = 0, the speeds of both motors 1410a, 1410b become equal. If the difference between the first stroke Y1 of the first motor 1410a and the second stroke Y2 of the second motor 1410b reaches or exceeds 7 mm, the second electric actuation mechanism will jam. When both motors 1410a, 1410b are synchronized, the first stroke speed X1 of the first motor 1410a = the second stroke speed X2 of the second motor 1410b = 6 mm/s.

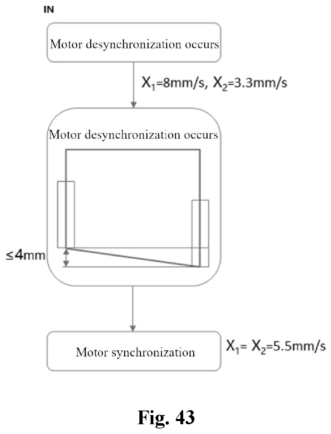

Referring to Figure 43, during forward movement of the seat cushion assembly, if the motors 1410a, 1410b of the seat cushion assembly become unsynchronized, the first motor 1410a has a first stroke speed X1 = 8 mm/s, and the second motor 1410b has a second stroke speed X2 = 3.3 mm/s. The first driving force F1 of the first electric actuation mechanism in the dual electric actuation mechanisms increases (↑), while the second driving force F2 of the second electric actuation mechanism in the dual electric actuation mechanisms decreases (↓). More than 0.6 times of the first driving force F1 is transferred to the second driving force F2. When F1 = 1600 N and F2 = 0, the speeds of both motors 1410a, 1410b become equal. If the difference between the first stroke Y1 of the first motor 1410a and the second stroke Y2 of the second motor 1410b reaches or exceeds 4 mm, the second actuator will jam. When both motors 1410a, 1410b are synchronized, the first stroke speed X1 of the first motor 1410a = the second stroke speed X2 of the second motor 1410b = 5.5 mm/s.

A second aspect of the present disclosure relates to a control method for controlling the foldable and reclining automotive seat. In this control method, when the automotive seat begins adjusting from its initial position, the motors of the dual electric actuation mechanisms drive lead screws to rotate. The rotating lead screws drive the push rods of the dual electric actuation mechanisms to extend, causing the sliding slot bushings to slide within the sliding slots, thereby resulting in a change in the relative angle between the front brackets and the pair of side plates, thereby flattening the front side of the seat cushion assembly and achieving angle adjustment of the seat cushion assembly.

In a preferred embodiment of the present disclosure, after the dual electric actuation mechanisms are activated, the control device detects the stroke difference Δy of the dual electric actuation mechanisms. If Δy > threshold b, then the control device controls an electric actuation mechanism with a larger stroke to stop moving until Δy = 0, then restarts the electric actuation mechanism with the larger stroke, and adjusts a duty cycle of the motor driving force of the electric actuation mechanism with the larger stroke to C, completing a seat function adjustment. If Δy ≤ threshold b, the control device does not need to intervene, and the motors of the dual electric actuation mechanisms do not stop moving until the seat function adjustment of the automotive is completed.

In a preferred embodiment of the present disclosure, the threshold b is the ratio of the stroke difference to the total stroke, and the threshold b ranges between 5% and 20%.

In a preferred embodiment of the present disclosure, the duty cycle of the motor driving force of the electric actuation mechanism ranges between 80% and 100%.

## Claims

1. An automotive seat device, comprising a backrest assembly, a seat cushion assembly, a support assembly, and a drive assembly for the seat cushion assembly, wherein the backrest assembly is hinged to a rear side of the support assembly via an angle adjustment assembly, **characterized in that** a front side of the seat cushion assembly is operatively connected to the drive assembly and is capable of moving up and down under a driving action of the drive assembly, thereby enabling height adjustment of the front side of the seat cushion assembly, while a rear side of the seat cushion assembly is capable of moving forward and backward following an up-down movement of the seat cushion assembly.

2. The automotive seat device according to claim 1, **characterized in that** the automotive seat device comprises or is constructed as a foldable low-profile automotive seat frame, wherein the backrest assembly comprises or is constructed as a backrest frame, wherein the seat cushion assembly comprises or is constructed as a seat cushion frame, wherein the drive assembly for the seat cushion assembly is constructed as a push-rod motor assembly, wherein the front side of the seat cushion frame is hinged to a front side of the support assembly via a front hinge rod, wherein the push-rod motor assembly is hinged to the front hinge rod and is capable of pushing the front hinge rod to move, thereby driving the front side of the seat cushion frame to adjust its height, wherein the automotive seat frame further comprises at least one fixed bracket, on which a horizontally extending sliding slot is correspondingly provided, wherein a rear side of the seat cushion frame is slidably disposed within the sliding slot and is capable of sliding along the sliding slot.

3. The automotive seat device according to claim 2, **characterized in that** the support assembly comprises a pair of front support assemblies and a pair of rear support assemblies, the pair of front support assemblies and the pair of rear support assemblies being respectively fixed onto a vehicle floor or onto upper rails of a pair of sliding rail assemblies, wherein the fixed brackets are provided as a pair and are respectively fixed onto the pair of rear support assemblies; preferably, wherein the front hinge rod are also provided as a pair, wherein lower ends of the pair of front hinge rods are hinged onto the pair of front support assemblies and upper ends of the pair of front hinge rods are hinged onto the front side of the seat cushion frame.

4. The automotive seat device according to claim 3, **characterized in that** the pair of front hinge rods are fixed together via a front cross tube welding assembly; preferably, a push-rod motor of the push-rod motor assembly is hinged onto the front cross tube welding assembly, and an end of the push rod of the push-rod motor assembly is hinged onto the rear support assembly.

5. The automotive seat device according to claim 3, **characterized in that** the pair of fixed brackets are connected together via a rear reinforcement tube.

6. The automotive seat device according to any one of claims 2 to 5, **characterized in that** the seat cushion frame comprises a pair of seat cushion side plates, a seat pan, and a rear tube welding assembly, wherein the seat pan is fixed to the front sides of the pair of seat cushion side plates, wherein both ends of the rear tube welding assembly are fixedly connected to the rear sides of the pair of seat cushion side plates; preferably, the upper ends of the pair of front hinge rods are respectively hinged to the front sides of the pair of seat cushion side plates, wherein the rear sides of the pair of seat cushion side plates are respectively slidably disposed within the sliding slots via stepped bolt assemblies, wherein the stepped bolts are capable of sliding along the sliding slots.

7. The automotive seat device according to claim 6, **characterized in that** the rear tube welding assembly comprises a rear cross tube and a pair of rear hinge rods, wherein one end of the rear hinge rod is connected to the rear cross tube, and the other end of the rear hinge rod is slidably disposed within the sliding slot via the stepped bolt assembly and is capable of sliding along the sliding slot.

8. The automotive seat device according to claim 6, **characterized in that** the stepped bolt assembly comprises a stepped bolt, a bushing, a washer, and a nut, wherein the bushing is sleeved onto a stepped shaft of the stepped bolt and is slidably disposed within the sliding slot, wherein the washer is sleeved onto the stepped shaft of the stepped bolt and cooperates with a bolt head of the stepped bolt to axially limit the bushing, wherein the nut is threaded onto the stepped bolt and cooperates with the fixed bracket to axially limit the washer.

9. The automotive seat device according to claim 8, **characterized in that** the shape of the bushing is configured such that its length extending along the direction of the sliding slot is greater than its length extending in the direction perpendicular to the sliding slot.

10. The automotive seat device according to claim 6, **characterized in that** backrest travel-limiting brackets are fixed onto a pair of backrest side plates of the backrest frame, wherein limiting steps are provided on a pair of backrest lower connecting plates of the backrest frame, wherein when the backrest frame pivots forward from a design position to achieve a forward pivoted-to-flat position of the backrest frame, the backrest travel-limiting brackets contact the limiting steps to limit the forward pivoted-to-flat motion of the backrest frame.

11. The automotive seat device according to claim 10, **characterized in that** the pair of backrest lower connecting plates are respectively fixed onto the pair of rear support assemblies.

12. The automotive seat device according to claim 6, **characterized in that** the angle adjustment assembly is constructed as a recliner, wherein a distance between an H-point of the backrest frame and a center of the recliner is greater than 50 mm.

13. The automotive seat device according to claim 4, **characterized in that** the front cross tube welding assembly comprises a front cross tube and a motor bracket welded onto the front cross tube, wherein the push-rod motor of the push-rod motor assembly is hinged onto the motor bracket.

14. The automotive seat device according to claim 2, **characterized in that** the angle adjustment assembly is constructed as an angle adjustment motor assembly, wherein the lower end of the backrest frame is hinged to the rear side of the support assembly via the angle adjustment motor assembly and is driven by the angle adjustment motor assembly to pivot.

15. The automotive seat device according to claim 3, **characterized in that** the angle adjustment assembly is constructed as an angle adjustment motor assembly, wherein the lower end of the backrest frame is hinged to the pair of rear support assemblies via the angle adjustment motor assembly.

16. The automotive seat device according to claim 14 or 15, **characterized in that** the angle adjustment motor of the angle adjustment motor assembly and the push-rod motor of the push-rod motor assembly are both equipped with Hall sensors.

17. The automotive seat device according to claim 16, **characterized in that** the angle adjustment motor of the angle adjustment motor assembly and the push-rod motor of the push-rod motor assembly are controlled by a switch.

18. The automotive seat device according to claim 1, **characterized in that** the automotive seat device is constructed as a foldable and reclining automotive seat, wherein the support assembly comprises or is constructed as a seat frame base, wherein the angle adjustment assembly is constructed as a recliner, wherein the backrest assembly is hinged to a rear side of the seat frame base via the recliner, wherein the seat frame base is fixed onto upper rails of a pair of sliding rails or onto a vehicle floor, wherein the automotive seat further comprises a pair of front brackets, wherein lower ends of the front brackets are hinged to a front side of the seat frame base, wherein the rear side of the seat cushion assembly is hinged to the rear side of the seat frame base, wherein the front side of the seat cushion assembly is hinged to upper ends of the front brackets, wherein the front side of the seat cushion assembly is driven to move up and down by dual electric actuation mechanisms mounted on the seat frame base, wherein the rear side of the seat cushion assembly moves forward and backward following the up-down movement of the front side of the seat cushion assembly, wherein the dual electric actuation mechanisms are controlled by a control device.

19. The automotive seat device according to claim 18, **characterized in that** it comprises a pair of lower connecting plates, wherein the seat frame base comprises a pair of lower connecting plate support brackets fixed onto upper rails of the pair of sliding rails or onto the vehicle floor, wherein the backrest assembly is hinged onto the lower connecting plate support brackets via the lower connecting plates, wherein the seat cushion assembly comprises a movable seat frame, wherein a rear side of the movable seat frame is hinged onto rear ends of the pair of lower connecting plate support brackets, wherein a front side of the movable seat frame is hinged to upper ends of the front brackets, wherein lower ends of the front brackets are hinged onto front ends of the lower connecting plate support brackets and are driven to move up and down by the dual electric actuation mechanisms, wherein the rear side of the movable seat frame moves forward and backward following the up-down movement of the front side of the movable seat frame.

20. The automotive seat device according to claim 19, **characterized in that** the movable seat frame comprises a pair of side plates, a first front cross tube, and a first rear cross tube, wherein both ends of the first front cross tube are respectively hinged to front sides of the pair of side plates, wherein both ends of the first rear cross tube are respectively hinged to rear sides of the pair of side plates.

21. The automotive seat device according to claim 20, **characterized in that** both ends of the first front cross tube are respectively hinged to the front sides of the pair of side plates via a plastic bushing.

22. The automotive seat device according to claim 21, **characterized in that** the seat frame base further comprises a pair of sliding slot cross plates fixed onto the pair of lower connecting plate support brackets or onto upper rails of the sliding rails, wherein a sliding slot is provided on each sliding slot cross plate, wherein the rear side of the movable seat frame is hinged into the sliding slots via a pair of rear brackets and sliding slot stepped bolts, wherein the sliding slot stepped bolts are installed at lower ends of the pair of rear brackets and are capable of sliding within the sliding slots.

23. The automotive seat device according to claim 22, **characterized in that** sliding slot bushings are sleeved onto the sliding slot stepped bolts, wherein the sliding slot bushings are capable of sliding within the sliding slots.

24. The automotive seat device according to claim 23, **characterized in that** upper ends of the pair of rear brackets are hinged onto the first rear cross tube.

25. The automotive seat device according to claim 24, **characterized in that** the seat frame base further comprises a second rear cross tube, wherein both ends of the second rear cross tube are respectively fixedly connected to rear sides of the pair of lower connecting plate support brackets, wherein motors of the dual electric actuation mechanisms are hinged onto the second rear cross tube via motor brackets.

26. The automotive seat device according to claim 25, **characterized in that** both ends of the first front cross tube are respectively hinged to upper ends of the pair of front brackets, wherein lower ends of the pair of front brackets are respectively hinged to front sides of the pair of lower connecting plate support brackets via stepped bolts, wherein a front bracket reinforcement bracket is fixed onto each front bracket, wherein ends of push rods of the dual electric actuation mechanisms are respectively hinged to the pair of front bracket reinforcement brackets via front end connecting screws.

27. The automotive seat device according to claim 26, **characterized in that** the seat frame base further comprises a second front cross tube, wherein both ends of the second front cross tube are respectively fixedly connected to front sides of the lower connecting plate support brackets.

28. A control method for controlling the automotive seat device according to any one of claims 18 to 27, **characterized in that**, when the automotive seat begins adjusting from an initial position, motors of the dual electric actuation mechanisms drive lead screws to rotate, wherein the rotating lead screws drive push rods of the dual electric actuation mechanisms to extend, causing the sliding slot bushings to slide within the sliding slots, thereby resulting in a change in a relative angle between the front brackets and the pair of side plates, thereby flattening the front side of the seat cushion assembly and achieving angle adjustment of the seat cushion assembly.

29. The control method according to claim 28, **characterized in that**, after the dual electric actuation mechanisms are activated, the control device detects a stroke difference Δy of the dual electric actuation mechanisms, wherein if Δy > a threshold b, then the control device controls an electric actuation mechanism with a larger stroke to stop moving until Δy = 0, then restarts the electric actuation mechanism with the larger stroke, and adjusts a duty cycle of the motor driving force of the electric actuation mechanism with the larger stroke to C, completing a seat function adjustment, wherein If Δy ≤ the threshold b, the control device does not need to intervene, and the motors of the dual electric actuation mechanisms do not stop moving until the seat function adjustment of the automotive is completed.

30. The control method according to claim 29, **characterized in that** the threshold b is a ratio of the stroke difference to the total stroke, and the ratio of the threshold b ranges between 5% and 20%.

31. The control method according to claim 30, **characterized in that** the duty cycle of the motor driving force ranges between 80% and 100%.
